# EUROPEAN PATENT APPLICATION

(11) **EP 4 510 659 A1**
(43) Date of publication of application: **19.02.2025**
(21) Application number: 22937412.9
(22) Date of filing: 13.04.2022
(51) Int. Cl.: H04W 8/22, H04W 52/24

(54) **TERMINAL DEVICE, BASE STATION DEVICE, AND WIRELESS COMMUNICATION METHOD**

(71) Applicant: Softbank Corp., Tokyo 105-7529 (JP)
(72) Inventor: KIHARA, Kenichi, Tokyo 105-7529 (JP)
(74) Representative: Meissner Bolte Partnerschaft mbB
(86) International application number: PCT/JP2022/017717
(87) International publication number: WO 2023/199433

(57) **Abstract**

There are provided a terminal device, a base station device, and a radio communication method which are capable of improving throughput according to situations. A terminal device (10) for performing radio communication with a base station device includes: a reception unit (11) that receives transmission power information including information about a maximum transmission power value of the terminal device (10) from the base station device when the terminal device (10) is in a connected state with the base station device; a transmission control unit (12) that controls a transmission power value and a transmission duty ratio based on the transmission power information; and a transmission unit (13) that performs uplink transmission to the base station device by using a frequency division duplex system based on the transmission power value and the transmission duty ratio.

## Description

### TECHNICAL FIELD

The present invention relates to a terminal device, a base station device, and a radio communication method.

### BACKGROUND ART

The 3GPP (Third Generation Partnership Project), which is an international standardization organization, is examining NR (New Radio), which is a new radio access technology for 5G (Fifth Generation) cellular communication systems. NR is being studied as a technology for making it possible to implement a wider variety of services than LTE (Long Term Evolution)-Advanced, which is the fourth-generation cellular communication system. For example, regarding NR, implementation requirements are defined for different use scenarios, such as eMBB (enhanced Mobile Broad Band) for realizing high-speed and high-capacity communication, URLLC (Ultra-Reliable and Low Latency Communication) for realizing ultra-reliable and low-delay communication, and mMTC (massive Machine Type Communication) for realizing simultaneous connection of many Internet-of-Things (IoT) devices.

In recent years, high-power user equipment (HPUE) of, for example, power class 2 (PC2) and power class 1.5 (PC1.5), which has a higher maximum value (upper limit value) of transmission power as compared with conventional techniques, has been introduced. Accordingly, a communication control system with such high-power user equipment has also been considered for NR. (See NPL 1 and 2).

### CITATION LIST

### NON-PATENT LITERATURE

NPL1: 3GPP Specifications "TS 38.101-1 V17.4.0 (2021-12)"
NPL2: 3GPP Specifications "TS 38.861 V17.0.0 (2021-09)"

### SUMMARY OF THE INVENTION

### TECHNICAL PROBLEM

Meanwhile, a transmission power value of the terminal device will be regulated by SAR (Specific Absorption Rate). When the transmission is performed according to a frequency division duplex system, it is necessary to increase the transmission power while limiting a duty ratio in order to satisfy the SAR regulation.

However, depending on the situation of the base station device and the terminal device, even in a case of the high-power user equipment, there exists a terminal device capable of improving throughput by maintaining a high duty ratio while using the conventional transmission power rather than increasing the transmission power while suppressing the duty ratio; and there also exists a situation where data traffic of the entire radio communication system can be increased.

The present invention was devised in light of the above-described circumstances and it is one of objects of the invention to provide a terminal device, a base station device, and a radio communication method that can improve throughput depending on the situation.

### SOLUTION TO PROBLEM

A terminal device according to one aspect of the present invention is a terminal device for performing radio communication with a base station device, wherein the terminal device includes: a reception unit for receiving transmission power information including information about the maximum transmission power value of the terminal device from the base station device when the terminal device is in a connected state with the base station device; a transmission control unit for controlling the transmission power value and the transmission duty ratio based on the transmission power information; and a transmission unit for performing uplink transmission to the base station device by using the frequency division duplex system based on the transmission power value and the transmission duty ratio.

A base station device according to one aspect of the present invention is a base station device for performing radio communication with a terminal device, wherein the base station device includes: an acquisition unit for acquiring power class information indicating a power class of the terminal device when the base station device is in a connected state with the terminal device; a determination unit for determining the maximum transmission power value of the terminal device based on the power class information and the radio communication quality information indicating the quality of radio communication with the terminal device; and a transmission unit for transmitting transmission power information including information about the determined maximum transmission power value to the terminal device.

A radio communication method according to one aspect of the present invention is a radio communication method used for a terminal device for performing radio communication with a base station device, wherein the radio communication method includes: receiving transmission power information containing information about the maximum transmission power value of the terminal device from the base station device when the terminal device is in a connected state with the base station device; controlling the transmission power value and the transmission duty ratio based on the transmission power information; and performing uplink transmission to the base station device by using the frequency division duplex system based on the transmission power value and the transmission duty ratio.

### ADVANTAGEOUS EFFECTS OF THE INVENTION

According to the present invention, throughput can be improved depending on the situation.

### BRIEF DESCRIPTION OF DRAWINGS

[Fig. 1] Fig. 1 is a configuration diagram illustrating an example of a schematic configuration of a radio communication system according to an embodiment;
[Fig. 2] Fig. 2 is a configuration diagram illustrating an example of a hardware configuration of a terminal device and a base station device according to an embodiment;
[Fig. 3] Fig. 3 is a configuration diagram illustrating a radio communication system according to a specific example of an embodiment;
[Fig. 4] Fig. 4 is a diagram for explaining an example of a radio frame when a terminal device according to an embodiment performs radio communication with a base station device by using FDD;
[Fig. 5] Fig. 5 is a diagram for explaining another example of the radio frame when the terminal device according to an embodiment performs radio communication with the base station device by using FDD;
[Fig. 6] Fig. 6 is a configuration diagram illustrating an example of a functional block configuration of the terminal device according to an embodiment;
[Fig. 7] Fig. 7 is a configuration diagram illustrating an example of a functional block configuration of the base station device according to an embodiment;
[Fig. 8] Fig. 8 is a time chart for explaining an example of a processing sequence performed by the radio communication system according to an embodiment;
[Fig. 9] Fig. 9 is a time chart for explaining another example of the processing sequence performed by the radio communication system according to an embodiment;
[Fig. 10] Fig. 10 is a flow chart for explaining an example of a processing sequence performed by the terminal device according to an embodiment; and
[Fig. 11] Fig. 11 is a flowchart for explaining an example of a processing sequence performed by the base station device according to an embodiment.

### DESCRIPTION OF EMBODIMENTS

Embodiments of the present invention will be described below. In the following description of the drawings, identical or similar parts are denoted by identical or similar reference numerals. However, the drawings are schematic. Therefore, specific dimensions, etc. should be determined in light of the following description. Furthermore, it is a matter of course that the drawings include parts regarding which the relationship and ratio of dimensions are different from each other. Furthermore, the technical scope of the present invention should not be understood as being limited to the embodiments.

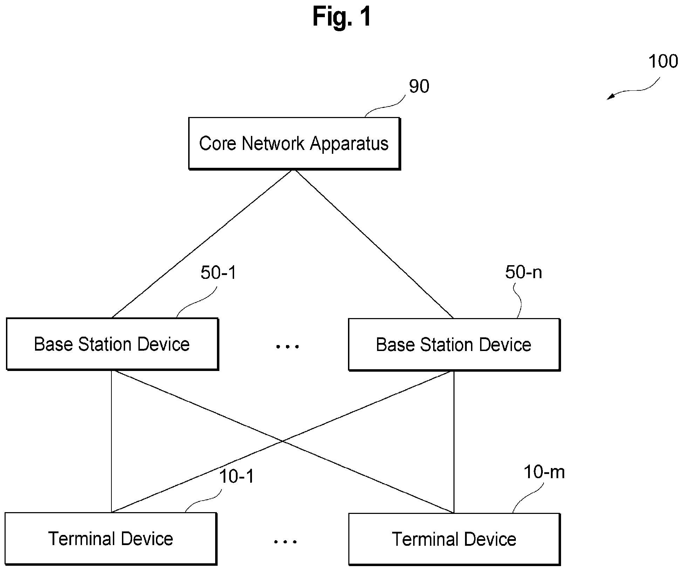

Firstly, a schematic configuration of a radio communication system according to an embodiment will be described with reference to Fig. 1. Fig. 1 is a configuration diagram illustrating an example of a schematic configuration of a radio communication system 100 according to a first embodiment.

The radio communication system 100 is configured by including terminal devices 10-1 to 10-m, base station devices 50-1 to 50-n, and a core network apparatus 90 as illustrated in Fig. 1.

The radio communication system 100 is a radio communication system targeted for, for example, NR. Incidentally, the present invention is applicable to any radio communication system having at least a terminal device and a base station device and is not limited to those targeted for NR. For example, the present invention is also applicable to LTE and LTE-Advanced. It is also applicable to a radio communication system where NR is used for part of the radio communication system. LTE and LTE-Advanced will be also hereinafter referred to as E-UTRA (Evolved Universal Terrestrial Radio Access), but these meanings are the same. An area (coverage area) formed by a base station device is called a cell and E-UTRA and NR are cellular communication systems constructed by a plurality of cells. Regarding the radio communication system according to this embodiment, either of a TDD (Time Division Duplex) or FDD (Frequency Division Duplex) system may be applied, and a different system may be applied to each cell.

Each of terminal devices 10-1 to 10-m wirelessly connects with one of base station devices 50-1 to 50-n. Moreover, each of the terminal devices 10-1 to 10-m may wirelessly connect with two or more of the base station devices 50-1 to 50-n simultaneously. Each of the base station devices 50-1 to 50-n may use E-UTRA or NR. For example, the base station device 50-1 may use NR and the base station device 50-n may use E-UTRA, or vice versa. The base station device in E-UTRA will be referred to as eNB (evolved NodeB) and the base station device in NR will be referred to as gNB (g-NodeB). In the following description, when a base station device is described, it means to include both eNB and gNB. Moreover, the terminal device(s) in E-UTRA and NR will be referred to as UE (User Equipment). The base station device gNB in NR may be connected to a terminal device by using a portion of the bandwidth of the frequency band it uses (BWP: BandWidth part). In the following description, when a cell(s) is described, it includes BWP.

Incidentally, the terminal devices 10-1 to 10-m are illustrated in Fig. 1 as m terminal devices (m is an integer equal to 2 or more). In the following description, when these m terminal devices are described without distinguishing them from one another, part of the reference numerals will be omitted and they will be simply referred to as the "terminal device(s) 10." Moreover, in Fig. 1, the base station devices 50-1 to 50-n are illustrated as n base station devices (n is an integer equal to 2 or more). In the following description, when these n base station devices are described without distinguishing them from one another, part of the reference numerals will be omitted and they will be simply referred to as the "base station device(s) 50."

The terminal device 10 may be connected to the base station device 50, for example, on a cell-by-cell basis and may be connected, for example, via carrier aggregation by using a plurality of cells. When the terminal device 10 is connected via a plurality of base station devices, that is, in a case of dual connectivity, a base station device which is initially connected is called a master node (MN) and a base station device(s) which is additionally connected is called a secondary node(s) (SN). The base station devices are connected by a base station interface. Moreover, the base station device 50 and a core network apparatus 90 are connected by a core interface. The base station interface is used to exchange control signals necessary for a handover or a cooperative operation between base station devices.

The core network apparatus 90 has, for example, the base station devices 50 under its control and mainly manages load control between the base station devices and mobility control such as calling (paging) and location registration of the terminal device 10. NR defines an AMF (Access and Mobility Management Function) for mobility management and an SMF (Session Management Function) for session management as a functional group of a control plane (C-plane) in the core network apparatus 90. E-UTRA defines an MME (Mobility Management Entity) corresponding to the AMF.

Incidentally, Fig. 1 illustrates an example in which the core network apparatus 90 is composed of a single apparatus; however, the present invention is not limited to this example. For example, the core network apparatus may be composed of a plurality of apparatuses including a server, a gateway, etc.

In a radio resource control (RRC) layer, the terminal device 10 and the base station device 50 transmit and receive RRC messages to proceed with session processing (also referred to as a "connection sequence"). As the session processing proceeds, the terminal device 10 changes from an idle state (RRC Idle) to a connected state (RRC Connected) of being connected with the base station device 50. The idle state corresponds to a standby status of the terminal device 10.

Moreover, the terminal device 10 and the base station device 50 transmit and receive MAC control elements (MAC CE) in a medium access control (MAC) layer. RRC messages are transmitted as RRC protocol data units (RRC PDU), and a common control channel (CCCH), a dedicated control channel (DCCH), a paging control channel (PCCH), a broadcast control channel (BCCH), or a multicast control channel (MCCH) is used as a logical channel to be mapped. A MAC CE is transmitted as a MAC PDU (or MAC subPDU). A MAC subPDU is equivalent to a service data unit (SDU) in the MAC layer plus, for example, an 8-bit header; and a MAC PDU includes one or more MAC subPDUs.

Physical channels and physical signals related to this embodiment will be described below. Of the physical channels related to the embodiment of the present invention, an explanation will be provided below about a physical broadcast channel (PBCH), a primary synchronization signal (PSS), a secondary synchronization signal (SSS), a physical random-access channel (PRACH), and a physical downlink control channel (PDCCH). Incidentally, regarding the radio communication system according to the embodiment, there also exist, other than those mentioned above, at least a physical uplink control channel (PUCCH), a physical downlink shared channel (PDSCH), a physical uplink shared channel (PUSCH), a sounding reference signal (SRS), and a demodulation reference signal (DMRS), but any detailed description about them has been omitted.

### <Physical Broadcast Channel (PBCH)>

The physical broadcast channel (PBCH) is transmitted from the base station device to the terminal device and is used to report common parameters (system information) in cells under the control of the base station device. The system information is further classified into a master information block (MIB) and a system information block (SIB). Incidentally, the system information block is further divided into SIB1, SIB2, and so on and then transmitted. The system information includes information necessary to connect to the cell, and for example, the MIB includes a system frame number and information indicating whether or not camping on to the cell is possible. Moreover, SIB1 includes parameters for calculating cell quality (cell selection parameters), channel information which is common between cells (random-access control information, PUCCH control information, and PUSCH control information), and other system information scheduling information. Moreover, the physical broadcast channel (PBCH) is periodically transmitted as a set with a synchronization signal block (SSB (or SS/PBSH)) which is composed of a primary synchronization signal (PSS) and a secondary synchronization signal (SSS). The terminal device 10 can acquire cell identifier (cell ID) information and reception timing and measure the signal quality of the relevant cell by receiving the synchronization signal block (SSB).

The system information reported by, for example, the physical broadcast channel (PBCH) is also called "system broadcast information" or "broadcast information." Moreover, the camp-on to a cell means that a terminal device has completed cell selection and/or cell reselection and the terminal device has entered a state of having selected a cell to monitor the system broadcast information and paging information. The terminal device establishes the aforementioned RRC connection with the base station device which forms the camped-on cell.

### <Primary Synchronization Signal (PSS)>

The primary synchronization signal (PSS) is used by the terminal device to synchronize with a reception symbol timing and a frequency of a downstream signal of the base station device. The primary synchronization signal (PSS) is a signal which the terminal device firstly attempts to detect in the procedure of detecting a cell of the base station device (hereinafter also referred to as a "cell search procedure"). Regarding the primary synchronization signal (PSS), three types of signals from "0" to "2" are repeatedly used based on the physical cell ID. Incidentally, the physical cell ID is an identifier of a physical cell, and 504 types of IDs are used in E-UTRA and 1008 types of IDs are used in NR.

### <Secondary Synchronization Signal (SSS)>

The secondary synchronization signal (SSS) is used by the terminal device to detect the physical ID of the base station device. Specifically, the secondary synchronization signal (SSS) is used by the terminal device to detect the physical cell ID in the cell search procedure. Regarding the secondary synchronization signal (SSS), 168 types of signals from "0" to "167" are repeatedly used in E-UTRA and 336 types of signals from "0" to "335" are repeatedly used in NR based on the physical cell ID.

### <Physical Random-Access Channel (PRACH)>

The physical random-access channel (PRACH) is used by the terminal device 10 to transmit a random-access preamble to the base station device 50. The physical random-access channel (PRACH) is generally used in a state where uplink synchronization is not established between the terminal device 10 and the base station device 50; and is used for transmission timing adjustment information (timing advance) and uplink radio resource requests. Information indicating a radio resource capable of transmitting the random-access preamble is transmitted to the terminal by using broadcast information and RRC messages.

### <Physical Downlink Control Channel (PDCCH)>

The physical downlink control channel (PDCCH) is transmitted from the base station device 50 to notify the terminal device 10 of downlink control information (DCI). The downlink control information includes uplink radio resource information (uplink grant (UL grant)) that can be used by the terminal device 10 or downlink radio resource information (downlink grant (DL grant)). The downlink grant is information indicating scheduling of a physical downlink data shared channel (PDSCH). The uplink grant is information indicating scheduling of a physical uplink shared channel (PUSCH). When the physical downlink control channel (PDCCH) is transmitted in response to the random-access preamble, the physical downlink data shared channel (PDSCH) indicated by the physical downlink control channel (PDCCH) is a random-access response and includes, for example, index information of the random-access preamble, transmission timing adjustment information, and uplink grant.

### <Hardware Configuration>

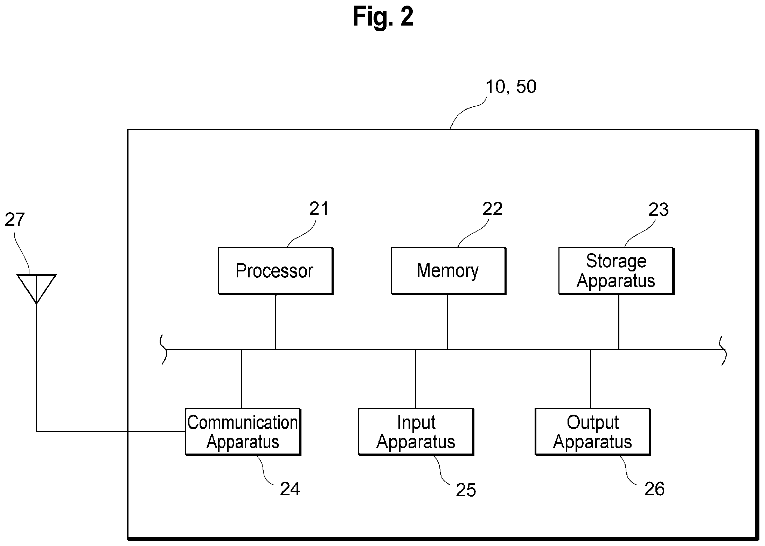

Next, a hardware configuration of the terminal device and the base station device according to an embodiment will be described with reference to Fig. 2. Fig. 2 is a configuration diagram illustrating an example of the hardware configuration of the terminal device 10 and the base station device 50 according to an embodiment.

Referring to Fig. 2, each of the terminal device 10 and the base station device 50 includes, for example, a processor 21, a memory 22, a storage apparatus 23, a communication apparatus 24, an input apparatus 25, an output apparatus 26, and an antenna 27.

The processor 21 is configured to control the operation of the respective units of the terminal device 10 or the base station device 50. The processor 21 is configured by including, for example, integrated circuits such as a CPU (Central Processing Unit), a DSP (Digital Signal Processor), an APU (Accelerated Processing Unit), an ASIC (Application Specific Integrated Circuit), a PLD (Programmable Logic Device), an FPGA (Field Programmable Gate Array), and an SoC (System-on-a-chip).

Each of the memory 22 and the storage apparatus 23 is configured to store programs, data, and so on. The memory 22 is configured from, for example, a ROM (Read Only Memory), an EPROM (Erasable Programmable ROM), an EEPROM (Electrically Erasable Programmable ROM), and/or a RAM (Random Access Memory). The storage apparatus 23 is configured from, for example, storage such as an HDD (Hard Disk Drive), an SSD (Solid State Drive), and/or an eMMC (Embedded Multi-Media Card).

The communication apparatus 24 is configured to perform communication via a wired and/or radio network. The communication apparatus 24 is configured by including, for example, a network card, and a communication module. Moreover, the communication apparatus 24 may be also configured by including an RF (Radio Frequency) apparatus that performs processing related to an amplifier and a radio signal, and a BB (BaseBand) apparatus that performs baseband signal processing.

For example, the RF apparatus performs D/A (Digital-to-Analog) conversion, modulation, frequency conversion, power amplification, etc. on a digital baseband signal received from the BB apparatus to generate a radio signal to be transmitted from the antenna 27. Moreover, the RF apparatus performs frequency conversion, demodulation, A/D

(Analog to Digital) conversion, etc. on the radio signal received from the antenna 27 to generate a digital baseband signal and transmit it to the BB apparatus. The BB apparatus performs processing for converting the digital baseband signal into an IP packet(s) and processing for converting the IP packet(s) into the digital baseband signal.

The input apparatus 25 is configured to input information by a user's operation. The input apparatus 25 is configured by including, for example, a keyboard, a touch panel, a mouse, and/or a microphone.

The output apparatus 26 is configured to output information. The output apparatus 26 is configured by including, for example, a display apparatus such as a liquid crystal display, an EL (Electro Luminescence) display, or a plasma display, and/or a speaker.

The antenna 27 is configured to be capable of radiating and receiving electric waves (electromagnetic waves) in one or more specified frequency bands. The antenna 27 may be non-directional, that is, may not have directionality. The non-directional antenna 27 has substantially the same gain from all 360-degree directions in a horizontal plane, in a vertical plane, or in both horizontal and vertical planes.

Incidentally, the antenna 27 is not limited to a single antenna. When the base station device 50 includes a plurality of antennas, for example, they may be divided into transmission antennas and reception antennas. Moreover, when the plurality of antennas are divided into the transmission antenna(s) and the reception antenna(s), at least either of them may include a plurality of antennas. Incidentally, when the base station device 50 includes a plurality of transmission and reception antennas or a plurality of transmission antennas, a beam forming technology described later can be used.

Moreover, the terminal device 10 and the base station device 50 may further include at least one of, for example, a global positioning system (GPS) receiver, various sensors such as an orientation sensor, a gravity sensor, a temperature sensor, and an acceleration sensor, various biometric authentication functions using, for example, a fingerprint(s), a retina(s), an iris(es), a face, and a voiceprint, various devices such as a camera, a microphone, a speaker, and a light, and an input/output interface including a connection terminal, although these are not illustrated in the drawing.

### <Specific Example of Radio Communication System>

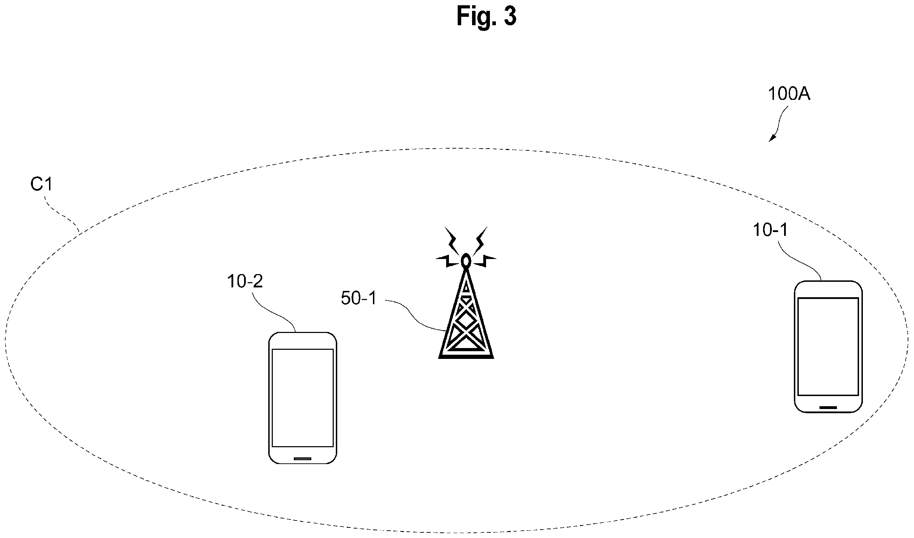

Next, a specific example of a radio communication system according to an embodiment will be described with reference to Fig. 3. Fig. 3 is a configuration diagram illustrating a radio communication system 100A according to a specific example of an embodiment. Incidentally, in Fig. 3, an illustration of a core network apparatus 90 included in the radio communication system 100A is omitted.

Referring to Fig. 3, the radio communication system 100A is configured by including one base station device 50-1 and two terminal devices 10-1 and 10-2. The base station device 50-1 forms a cell C1 having a coverage area of, for example, a radius of several hundreds of meters to ten-odd kilometers. The base station device 50-1 communicates wirelessly with the terminal devices 10-1 and 10-2 existing (also referred to as "present in the relevant service area") in a cell it forms to provide mobile communication services to the terminal devices 10-1 and 10-2.

The terminal devices 10-1 and 10-2 are the same or substantially the same terminal devices. In the example illustrated in Fig. 3, the terminal device 10-1 is located near the edge of the cell C1 of the base station device 50-1, while the terminal device 10-1 is located near the base station device 50-1. The terminal devices 10-1 and 10-2 are respectively terminal devices with higher output power, that is, higher maximum transmission power value than that of any conventional terminal device. Specifically, each of the terminal devices 10-1 and 10-2 is, for example, a power class 2 (PC2) and has a maximum transmission power value of 26 dBm.

In recent years, high-power user equipment (HPUE), such as the terminal devices 10-1 and 10-2, has been introduced and it is expected in the radio communication system 100A illustrated in Fig. 3 that the coverage area of the cell C1 should be expanded and the throughput of radio communication between the base station device 50-1 and the terminal devices 10-1 and 10-2 should be improved.

Meanwhile, according to the laws and regulations of each country, when radio equipment which emits electric waves of a specified frequency is used near a human body, specific absorptivity (also referred to as "specific-absorption rate (SAR)") of the electric waves emitted from the radio equipment in the human body is required to satisfy a specified value. For example, in a case of a local SAR, a reference value is defined as a time average value of an amount of energy absorbed per 10 g of arbitrary tissues in 6 minutes when a person is exposed to the electric waves. Therefore, the high-power user equipment can increase the transmission power within the range that satisfies this SAR regulation.

Moreover, regarding bidirectional communication between the base station device and the terminal device, duplex technology (also referred to as "duplex technology") is known as a method for realizing a bidirectional line of an upstream channel and a downstream channel. In general, the duplex technology is broadly classified into two systems: Time Division Duplex (hereinafter referred to as "TDD") and Frequency Division Duplex (hereinafter referred to as "FDD").

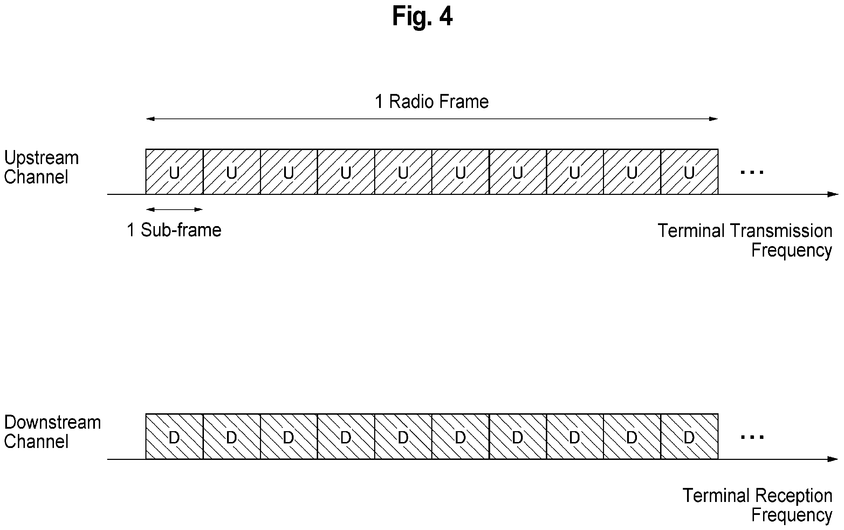

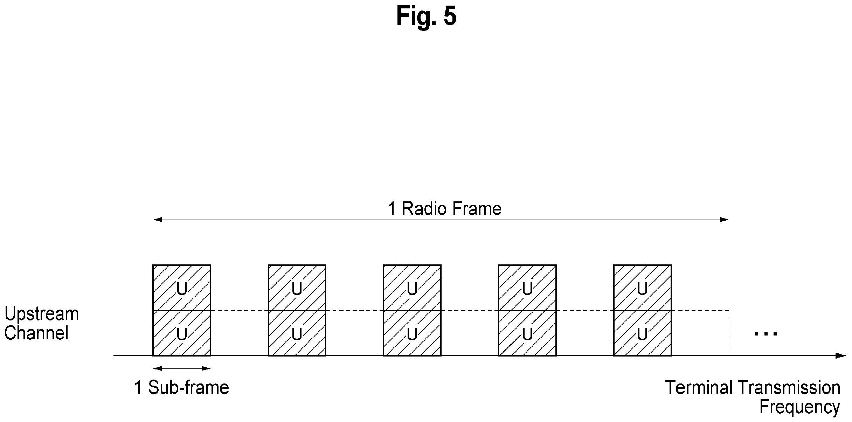

Now, radio frames using FDD of the radio communication system according to an embodiment will be described with reference to Figs. 4 and 5. Fig. 4 is a diagram for explaining an example of a radio frame when the terminal devices 10-1 and 10-2 according to an embodiment perform radio communication with the base station device 50-1 by using FDD. Fig. 5 is a diagram for explaining another example of a radio frame when the terminal devices 10-1 and 10-2 according to an embodiment perform radio communication with the base station device 50-1 by using FDD.

Referring to Fig. 4, in FDD, the upstream channel and the downstream channel have different frequencies and it is possible to transmit upstream and downstream simultaneously. In NR, a radio frame has a length of 10 ms along a time axis direction and is composed of 10 subframes. Each subframe has a length of 1 ms along the time axis direction and is composed of one slot or a plurality of slots (which are not illustrated in the drawing).

As long as the above-mentioned SAR regulation is satisfied, FDD can perform transmission with a duty ratio (also called a "time rate") of 1 (100%) in each radio frame as illustrated in Fig. 4.

On the other hand, as illustrated in Fig. 5, when the transmission power is, for example, doubled in the upstream channel, it is necessary to limit the duty ratio of each radio frame to, for example, 1/2 in order to satisfy the SAR regulation. Specifically speaking, in each radio frame, control is performed to set sub-frames which are intentionally not transmitted.

Accordingly, it is necessary to increase the transmission power while limiting the duty ratio in **FDD** in order to satisfy the SAR regulation. For this reason, depending on the situation of the base station device and the terminal device even in a case of the high-power user equipment, there exists a terminal device capable of improving the throughput by maintaining a high duty ratio while maintaining the conventional transmission power rather than increasing the transmission power by suppressing the duty ratio; and there also exists a situation where data traffic of the entire radio communication system can be increased.

### <Functional Block Configuration>

### (Terminal Device)

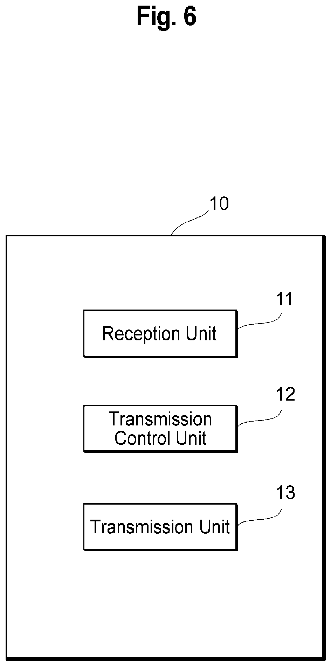

Next, a functional block configuration of a terminal device according to an embodiment will be described with reference to Fig. 6. Fig. 6 is a configuration diagram illustrating an example of the functional block configuration of the terminal device 10 according to an embodiment. Incidentally, Fig. 6 is intended to illustrate functional blocks required in this embodiment and it does not eliminate a case where the terminal device 10 includes functional blocks other than those illustrated.

The terminal device 10 includes, as illustrated in Fig. 6, a reception unit 11, a transmission control unit 12, and a transmission unit 13 as functional blocks.

The reception unit 11 is configured to receive enquiries from the base station device 50 when it is in a connected state with that base station device 50.

More specifically, the reception unit 11 is configured to receive capability information enquiries from the base station device 50 when it is in the connected state with that base station device 50.

Specifically, the base station device 50 forms a cell having a coverage area of, for example, a radius of several hundreds of meters to ten-odd kilometers. The base station device 50 attempts to provide mobile communication services to the terminal device by performing radio communication with the terminal device 10 existing (also referred to as "present in the relevant service area") in the cell it forms.

The terminal device 10 selects a cell to perform radio communication with the base station device 50. Incidentally, in this specification, cell selection and to select a cell mean at least either of the cell selection and the cell reselection described above. When the cell selection has been completed and the terminal device 10 has selected a cell for monitoring the system broadcast information and the paging information, the terminal device 10 is camped on to the relevant cell. Therefore, the terminal device 10 can establish the RRC connection with the base station device 50 which forms the camped-on cell. When the RRC connection has been completed, the terminal device 10 enters a connected state (RRC Connected) with the base station device 50 which forms the camped-on cell and transmission and reception of data, that is, upstream communication and downstream communication of data become possible. Under this circumstance, when a specified frequency band is allocated to the cell of the base station device 50, it can be said that the terminal device 10 is in the connected state (RRC Connected) with the base station device 50 by means of using the specified frequency band.

The specified frequency band is, as an example, a frequency range used in NR. The frequency range used in NR is classified into the following two ranges: FR1 (Frequency Range 1) and FR2 (Frequency Range 2). FR2 is a frequency range from about 30 GHz to about 100 GHz and a frequency range from 24250 MHz to 52600 MHz is defined in 3GPP. Regarding radio communication using FR2, it is necessary to consider antenna arrangement, housing structure, etc., and requirements are defined in a format in which the power class and the terminal type of the terminal device 10 correspond to each other. Regarding FR1, a frequency range from 410 MHz to 7125 MHz.is defined in 3GPP.

Capability information enquiries are requests for demanding the terminal device 10 to send notification (response) regarding its own capability information. An enquiry from the base station device 50 is performed by transmitting a capability information enquiry (UECapabilityEnquiry) message to the terminal device 10.

The capability information is information indicating a function managed or supported by the terminal device 10 itself among various functions defined in relation to the radio communication. The function managed or supported by the terminal device 10 itself is, in other words, a function that can be executed by the terminal device 10.

Parameter information indicating that the above-mentioned function is mounted in the terminal device 10 and that the requirements defined for the function are satisfied is set in the capability information.

Specifically, the capability information in LTE includes parameter information such as an LTE terminal device category, and a list of LTE support bands and combinations of LTE and LTE support bands. Moreover, the capability information in NR includes information such as a NR terminal device category, a supported physical parameter set, a list of NR support bands and combinations of LTE and NR support bands, a parameter indicating whether or not a function for stand-alone communication is supported, and a parameter indicating whether or not DC (Dual Connectivity) is supported.

Moreover, the reception unit 11 is configured to receive transmission power information including information about a maximum transmission power value of the terminal device 10 from the base station device 50 when it is in the connected state (RRC Connected) with that base station device 50. The maximum transmission power value of the terminal device 10 is classified according to power classes described earlier. For example, in the power class 1.5 (hereinafter also referred to as "PC1.5"), the maximum transmission power value is 29 dBm; in the power class 2 (hereinafter also referred to as "PC2"), the maximum transmission power value is 26 dBm; and in the power class 3 (hereinafter also referred to as "PC3"), the maximum transmission power value is 23 dBm.

The transmission power information includes availability information indicating the availability of the maximum transmission power value of the terminal device 10. The availability information stores, for example, "1" indicating availability or "0" indicating unavailability. When the availability information indicates unavailability, the use of the maximum transmission power value of the relevant terminal device 10 is limited even if the terminal device 10 is high-power user equipment (HPUE).

Moreover, the transmission power information may also include transmission power value information indicating a transmission power value in addition to or in place of the availability information. Furthermore, the transmission power information may include transmission duty ratio information indicating a transmission duty ratio in addition to the transmission power value information. For example, when the transmission power value information is 26 dBm, the transmission duty ratio information is 0.5 (50%); and when the transmission power value information is 23 dBm, the transmission duty ratio information is 1 (100%). Incidentally, when the transmission power value is designated, the transmission duty ratio can be calculated based on, for example, the regulation by SAR. Therefore, as long as at least the transmission power value information is included among the transmission power value information and the transmission duty ratio information, the transmission power value and the transmission duty ratio can be obtained from the transmission power information.

The transmission control unit 12 is configured to control the transmission power value and the transmission duty ratio based on the transmission power information. The transmission power value and the transmission duty ratio which are controlled by the transmission control unit 12 relate to uplink transmission using FDD.

The transmission unit 13 is configured to perform uplink transmission to the base station device 50 by using the frequency division duplex (FDD) system based on the transmission power value and the transmission duty ratio which are controlled by the transmission control unit 12.

Accordingly, the transmission power value and the transmission duty ratio are controlled based on the transmission power information, and the uplink transmission to the base station device 50 is performed by using the frequency division duplex (FDD) system based on the controlled transmission power value and transmission duty ratio. Consequently, based on the transmission power information received when it is in the connected state (RRC Connected) with the base station device 50, for example, according to the communication quality of the relevant terminal device 10 or a free capacity of the radio resource of the cell formed by the base station device 50 in the connected state (RRC Connected), It becomes possible to perform control to, for example, change the transmission power value and the transmission duty ratio in the uplink transmission using the frequency division duplex (FDD) system.

Moreover, the transmission power information includes availability information indicating whether or not the maximum transmission power value of the terminal device 10 is available. Accordingly, the transmission power value and the transmission duty ratio in the uplink transmission using the frequency division duplex (FDD) system can be easily switched based on the availability information.

Furthermore, the transmission power information includes transmission power value information indicating a transmission power value. Accordingly, the transmission power value and the transmission duty ratio in the uplink transmission using the frequency division duplex (FDD) system can be easily set based on the transmission power value information.

The transmission unit 13 is configured to transmit power class information indicating the power class of the terminal device 10 to the base station device 50 when it is in the connected state (RRC Connected) with the base station device 50. Accordingly, for example, the transmission power information which is set in the base station device 50 based on the power class information can be received from the relevant base station device 50.

More specifically, the transmission unit 13 causes the power class information indicating the power class of the terminal device 10 to be included in the capability information and transmits it to the base station device 50. Specifically, the transmission unit 13 causes the power class information to be included in a capability information (UECapabilityInformation) message and transmits it to the base station device 50 in the connected state (RRC Connected).

Consequently, by including the power class information in the capability information and transmitting it to the base station device 50, a function(s) related to the radio communication supported by the terminal device 10 and the power class information held by the terminal device 10 can be easily reported to the base station device 50.

Incidentally, the power class information is not limited to the case where it is included in the capability information and then transmitted. For example, the transmission unit 13 may transmit the power class information itself to the base station device 50.

Incidentally, the reception unit 11 and the transmission unit 13 may be implemented by, for example, the antenna 27 and the communication apparatus 24 or may be implemented by the processor 21 in addition to the communication apparatus 24 by executing a program(s) stored in the storage apparatus 23. The transmission control unit 12 may be implemented by the processor 21 by executing a program(s) stored in the storage apparatus 23. When executing a program, the program may be stored in a storage medium. The storage medium storing the relevant program may be a non-transitory computer-readable storage medium. The non-transitory storage medium is not particularly limited, but may be, for example, a storage medium such as a USB (Universal Serial Bus) memory or a CD-ROM (Compact Disc ROM).

### (Base Station Device)

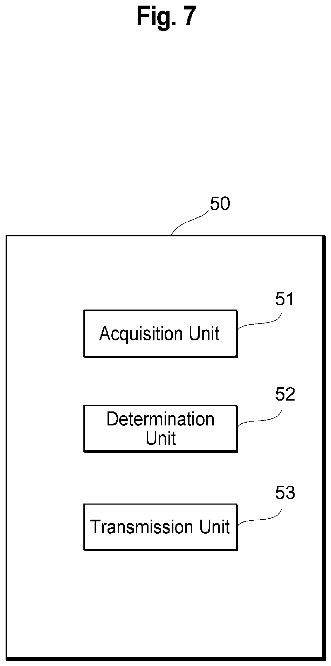

Next, a functional block configuration of the base station device according to an embodiment will be described with reference to Fig. 7. Fig. 7 is a configuration diagram illustrating an example of the functional block configuration of the base station device 50 according to an embodiment. Incidentally, Fig. 7 is to show functional blocks required in this embodiment and it does not eliminate a case where the base station device 50 includes functional blocks other than those illustrated.

The base station device 50 includes, as illustrated in Fig. 7, an acquisition unit 51, a determination unit 52, and a transmission unit 53 as functional blocks.

The acquisition unit 51 is configured to acquire power class information indicating the power class of a terminal device 10 when it is in the connected state with that terminal device 10. The acquisition of the power class information is normally performed by receiving the power class information transmitted from the terminal device 10. Moreover, for example, when the terminal device 10 in the connected state is handed over from the cell of an adjacent base station device 50, the acquisition unit 51 may receive and acquire the power class information of the terminal device 10 from the adjacent base station device 50.

More specifically, the acquisition unit 51 is configured to transmit capability information enquiries to the relevant terminal device 10 when it is in the connected state with the terminal device 10.

Specifically, the specified frequency band is allocated to a cell of the base station device 50 as described above; and when the terminal device 10 camps on to the relevant cell to complete an RRC connection, the base station device 50 enters the connected state (RRC Connected) with the terminal device 10 by using the specified frequency band. While being in this state, the acquisition unit 51 transmits a capability information enquiry (UECapabilityEnquiry) message to the terminal device 10 in the connected state (RRC Connected). Accordingly, upon receiving a capability information (UECapabilityInformation) message that is a response from the terminal device 10, the power class information included in that capability information (UECapabilityInformation) message can be acquired.

The determination unit 52 is configured to determine the maximum transmission power value of the terminal device 10 based on the acquired power class information and radio communication quality information indicating the quality of radio communication with the terminal device 10. The determination unit 52 receives the radio communication quality information from, for example, the terminal device 10 in the connected state (RRC Connected).

The radio communication quality information includes, for example, RSRP (Reference Signal Received Power) or RSSI (Received Signal Strength Indication) indicating the received power of the cell formed by the base station device 50 in the terminal device 10. Moreover, the radio communication quality information may include, for example, RSRQ (Reference Signal Received Quality) or SINR (Signal to Interference Noise Ratio) indicating the received power quality of the cell formed by the base station device 50 in the terminal device 10.

Under this circumstance, even if the relevant terminal device 10 is high-power user equipment (HPUE) as described above, the use of the maximum transmission power value possessed by the terminal device 10 may not be necessarily suitable in the uplink transmission using the frequency division duplex (FDD) system. For example, the following cases may be possible as the situation where the use of the maximum transmission power value of terminal device 10 is suitable. Specifically speaking, the case where the terminal device 10 in the connected state (RRC Connected) is not located at the edge of the cell; the case where the status of electric waves received by the terminal device 10 in the connected state (RRC Connected) is good; and the case where the degree of freedom of the radio resource in the cell of the base station device 50 is high, specifically the case where an amount of traffic under the control of the base station device 50 is relatively small. The radio resource of the cell means a radio resource in the same specified frequency band in the connected state (RRC Connected) with the terminal device 10. Therefore, radio resources of other frequency bands using carrier aggregation technology, dual connectivity technology, and so on are not included in the radio resource of the cell.

Therefore, the determination unit 52 judges, based on the power class information and the radio communication quality information, whether or not the above-mentioned situation exists; and if the above-mentioned situation exists, the determination unit 52 causes the terminal device 10 to use the maximum transmission power value; and if the relevant situation does not exist, the determination unit 52 determines the maximum transmission power value of the terminal device 10 to cause the terminal device 10 to limit the maximum transmission power value.

The transmission unit 53 is configured to transmit the transmission power information containing information about the determined maximum transmission power value to the terminal device in the connected state (RRC Connected).

Specifically, the transmission unit 53 transmits a transmission power information (RRCReconfiguration) message to the terminal device 10 in the connected state (RRC Connected). The terminal device 10 that has received the transmission power information (RRCReconfiguration) message controls the transmission power value and the transmission duty ratio based on the transmission power information (RRCReconfiguration) message as described earlier, and performs uplink transmission to the base station device 50 by using the frequency division duplex (FDD) system based on the controlled transmission power value and transmission duty ratio.

Accordingly, the maximum transmission power value of the terminal device 10 is determined based on the power class information and the radio communication quality information, and the transmission power information including information about the determined maximum transmission power value is transmitted to the terminal device in the connected state (RRC Connected). Consequently, based on the power class information and the radio communication quality information which are received when it is in the connected state (RRC Connected) with terminal device 10, for example, when the terminal device 10 is high-power terminal equipment (HPUE), it becomes possible to determine the maximum value (upper limit value) of the transmission power value in the uplink transmission using the frequency division duplex (FDD) system according to the communication quality, etc. Therefore, the terminal device 10 can perform the uplink transmission by using **FDD** and improve the throughput based on the maximum transmission power value determined according to the situation.

Moreover, the determination unit 52 is configured to determine the maximum transmission power value of the terminal device 10 based on the power class information and the radio communication quality information, as well as the radio resource information related to the radio resource in the specified frequency band. Under this circumstance, the base station device 50 is in the (RRC Connected) state with the terminal device 10 by using its own cell, that is, the specified frequency band. Thus, it is possible to determine the maximum value (upper limit value) of the transmission power of the terminal device 10 according to, for example, the free capacity of the radio resource in the specified frequency band.

Incidentally, the acquisition unit 51 and the transmission unit 53 may be implemented by, for example, the communication apparatus 24 or may be implemented by the processor 21 in addition to communication apparatus 24 by executing a program(s) stored in the storage apparatus 23. The determination unit 52 may be implemented by the processor 21 by executing a program(s) stored in the storage apparatus 23. When executing a program, the program may be stored in a storage medium. The storage medium storing the relevant program may be a non-transitory computer-readable storage medium. The non-transitory storage medium is not particularly limited, but may be, for example, a storage medium such as a USB memory or a CD-ROM.

### <Processing Sequences>

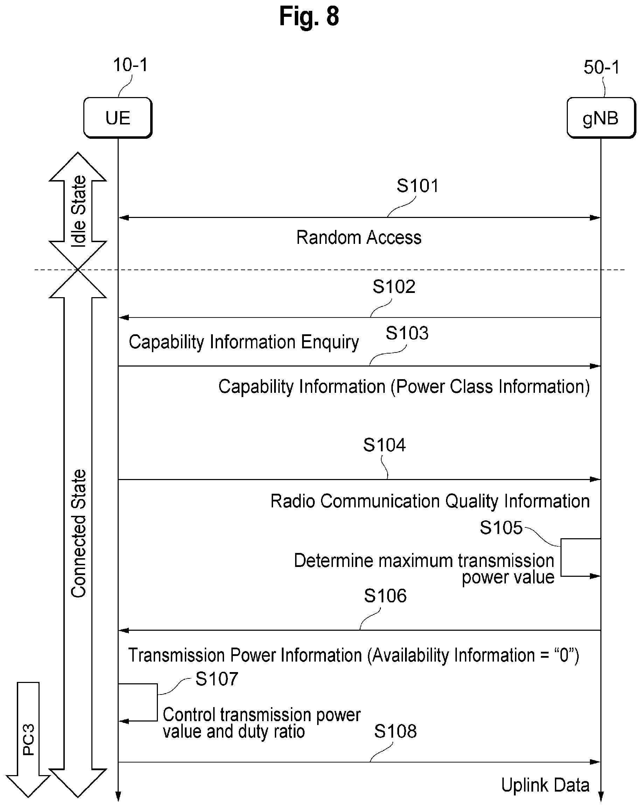

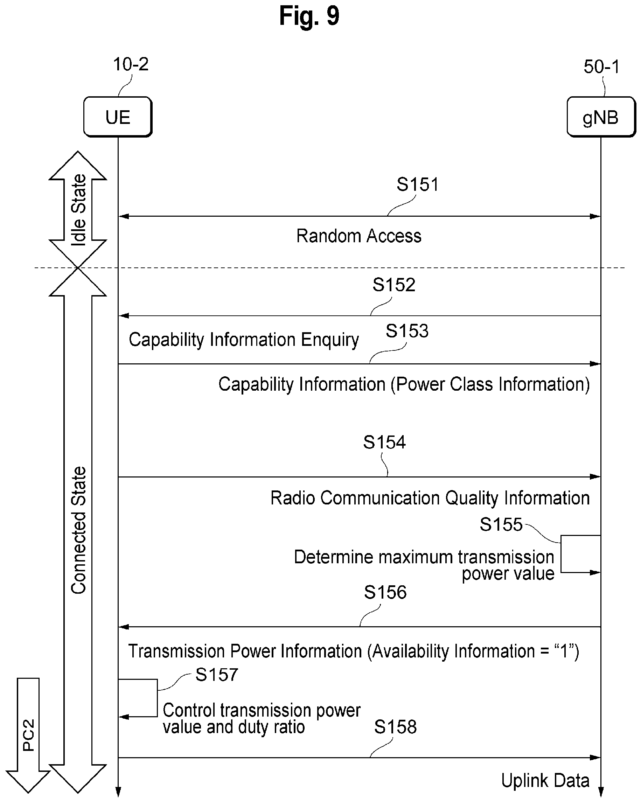

Next, a processing sequence performed by the radio communication system according to an embodiment will be described with reference to Figs. 8 and 9. Fig. 8 is a time chart for explaining an example of a processing sequence performed by a radio communication system 100A according to an embodiment. Fig. 9 is a time chart for explaining another example of a processing sequence performed by the radio communication system 100A according to an embodiment. Incidentally, in Fig. 8, for the sake of simplification of explanation, a processing sequence between the base station device 50-1 and the terminal device 10-1 in the processing sequences of the radio communication system 100A illustrated in Fig. 3 will be described; and an explanation about the processing sequence between the base station device 50-1 and the terminal device 10-2 and the processing sequence between the base station device 50 and the core network apparatus 90 will be omitted. Similarly, in Fig. 9, for the sake of simplification of explanation, a processing sequence between the base station device 50-1 and the terminal device 10-2 in the processing sequences of the radio communication system 100A illustrated in Fig. 3 will be described; and an explanation about the processing sequence between the base station device 50-1 and the terminal device 10-1 and the processing sequence between the base station device 50 and the core network apparatus 90 will be omitted. Moreover, in Fig. 8, the terminal device 10-1 is also referred to as "UE" and the base station device 50-1 is also referred to as "gNB"; and in Fig. 9, the terminal device 10-2 is also referred to as "UE" and the base station device 50-1 is also referred to as "gNB."

### (Example of Processing Sequence between Terminal Device and Base Station Device)

In the explanation of the example illustrated in Fig. 8, it is assumed that the following processing has already been performed in advance. Specifically speaking, the base station device 50-1 has periodically transmitted a synchronization signal to a terminal device(s) around it and the terminal device 10-1 has been synchronized by this synchronization signal in advance and has received reference information from the base station device 50-1. Moreover, the base station device 50-1 has transmitted broadcast information including at least either a master information block (MIB) or a system information block (SIB) to the terminal device 10-1 by, for example, a physical broadcast channel (PBCH) and the terminal device 10-1 has performed cell selection or cell reselection based on the information included in this broadcast information and has camped on to the cell formed by the base station device 50-1.

Referring to Fig. 8, for example, when uplink data (Mobile Originated Data) is generated in the terminal device 10-1, the terminal device 10 performs random access to, including establishment of an RRC connection with, the base station device 50-1 (S101). As a result of the random access in step S101, when the RRC connection is established between the terminal device 10-1 and the base station device 50-1, the terminal device 10-1 changes from an idle state (RRC Idle) to a connected state (RRC Connected).

At the base station device 50-1, when the RRC connection with the terminal device 10-1 has been completed, the transmission unit 53 transmits a capability information enquiry (UECapabilityEnquiry) message to the terminal device 10 (S102).

At the terminal device 10-1, the reception unit 11 receives the capability information enquiry (UECapabilityEnquiry) message transmitted in step S102 and the transmission unit 13 causes the power class information of the terminal device 10-1 itself to be included in a capability information (UECapabilityInformation) message in response to a request included in the capability information enquiry (UECapabilityEnquiry) message and transmits it to the base station device 50-1, which is a base station device that transmitted the capability information enquiry (UECapabilityEnquiry) message (S103).

Moreover, the terminal device 10-1 has measured the quality of radio communication with the base station device 50-1 based on a reference signal which was previously received from the base station device 50-1, and the transmission unit 13 transmits the radio communication quality information indicating that quality to the base station device 50-1 (S104).

At the base station device 50-1, the determination unit 52 receives the capability information (UECapabilityInformation) message transmitted from the terminal device 10-1 in step S103, and also receives the radio communication quality information transmitted from the terminal device 10-1 in step S104, and determines the maximum transmission power value of the terminal device 10-1 based on the power class information included in the capability information (UECapabilityInformation) message and the radio communication quality information (S105).

Next, the transmission unit 53 transmits the transmission power information (RRCReconfiguration) message including the information about the maximum transmission power value determined in step S105 to the terminal device 10-1, which is a terminal device that has transmitted the capability information (UECapabilityInformation) message (S106). In the example illustrated in Fig. 8, the transmission power information (RRCReconfiguration) message transmitted in step S106 includes availability information and "0" indicating unavailability is stored in this availability information.

At the terminal device 10-1, the reception unit 11 receives the transmission power information (RRCReconfiguration) message transmitted from the base station device 50-1 and the transmission control unit 12 controls the transmission power value and the duty ratio in the uplink transmission using FDD based on the received transmission power information (RRCReconfiguration) message (S107). In the example illustrated in Fig. 8, since "0" is stored in the availability information, the transmission control unit 12 controls the transmission power value and the duty ratio so as to make the power class 2 (PC2) unavailable and set the setting to power class 3 (PC3). As a result, for example, the transmission power value is set to 23 dBm and the duty ratio is set to 1 (100%). Accordingly, at the terminal device 10-1 located near the edge of the cell C1 illustrated in Fig. 3, the use of high power in the uplink transmission using FDD can be limited.

Then, the transmission unit 13 transmits uplink data (Mobile Originated Data) to the base station device 50-1 by using FDD according to the transmission power value and the duty ratio which are controlled in step S107 (S108).

### (Another Example of Processing Sequence between Terminal Device and Base Station Device)

In the explanation of the example illustrated in Fig. 9, it is assumed that the following processing has already been performed in advance. Specifically speaking, the base station device 50-1 has periodically transmitted a synchronization signal to a terminal device(s) around it and the terminal device 10-2 has been synchronized by this synchronization signal in advance and has received reference information from the base station device 50-1. Moreover, the base station device 50-1 has transmitted broadcast information including at least either a master information block (MIB) or a system information block (SIB) to the terminal device 10-2 by, for example, a physical broadcast channel (PBCH) and the terminal device 10-2 has performed cell selection or cell reselection based on the information included in this broadcast information and has camped on to the cell formed by the base station device 50-1.

Incidentally, since steps S151 to S155 illustrated in Fig. 9 are the same or substantially the same as steps S101 to S105 illustrated in Fig. 8 described earlier, the description of each step is omitted.

Referring to Fig. 9, at the base station device 50-1, after the maximum transmission power value is determined in step S155, the transmission unit 53 transmits a transmission power information (RRCReconfiguration) message including information about the maximum transmission power value to the terminal device 10-2, which is the terminal device that has transmitted the capability information (UECapabilityInformation) message (S156). In the example illustrated in Fig. 8, the transmission power information (RRCReconfiguration) message transmitted in step S106 includes availability information and "1" indicating availability is stored in this availability information.

At the terminal device 10-2, the transmission control unit 12 controls the transmission power value and the duty ratio in the uplink transmission using FDD based on the received transmission power information (RRCReconfiguration) message (S157). In the example illustrated in Fig. 9, since "1" is stored in the availability information, the transmission control unit 12 controls the transmission power value and the duty ratio so as to set the setting to power class 2 (PC2). As a result, for example, the transmission power value is set to 26 dBm and the duty ratio is set to 0.5 (50%). This makes it possible to use high power in the uplink transmission using FDD at the terminal device 10-2 located near the base station device 50-1, not near the edge of the cell C1 illustrated in Fig. 3.

Then, the transmission unit 13 transmits uplink data (Mobile Originated Data) to the base station device 50-1 by using FDD according to the transmission power value and the duty ratio which are controlled in step S157 (S158).

Accordingly, as the base station device 50-1 transmits the transmission power information (RRCReconfiguration) message to the terminal devices 10-1 and 10-2 in the connected state (RRC Connected), it becomes possible to control the transmission power value and the duty ratio in the uplink transmission using FDD with respect to each of the terminal devices 10-1 and 10-2.

In this embodiment, Figs. 8 and 9 illustrate examples of determining the maximum transmission power value and transmitting the transmission power information immediately after the RRC connection is established; however, the present invention is not limited to these examples. For example, the base station device 50-1 may determine the maximum transmission power value and transmit the transmission power information according to changes in the number of terminal devices in the relevant service area, the data traffic, the radio resource(s), etc. in the cell C1.

Moreover, regarding the availability information included in the transmission power information, a criterion for changing the availability information from "0" representing unavailability to "1" representing availability and a criterion for changing the availability information from "1" representing availability to "0" representing unavailability may be the same or different.

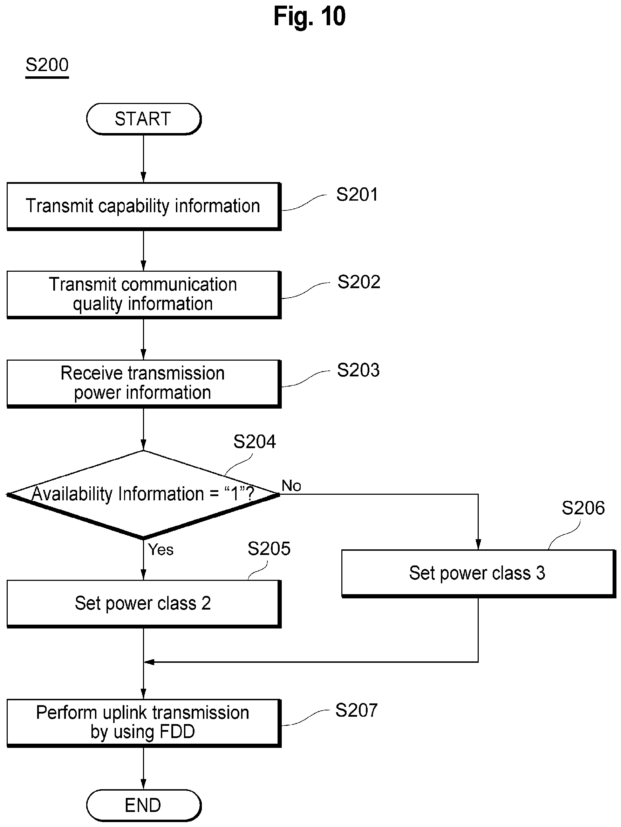

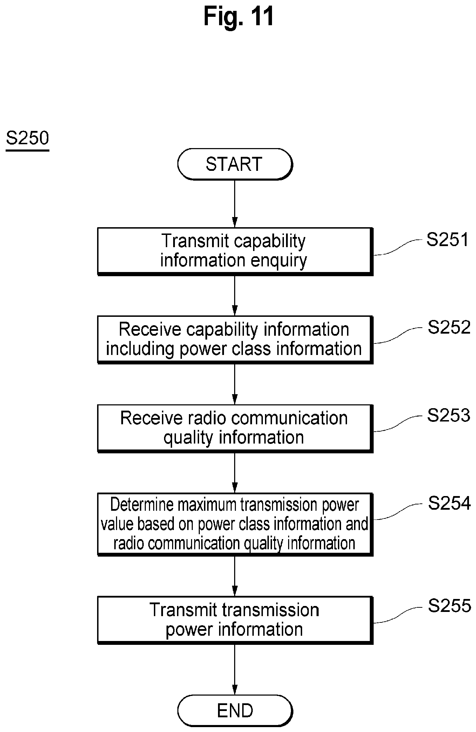

Next, processing sequences performed by the terminal device and the base station device according to an embodiment will be described with reference to Figs. 10 and 11. Fig. 10 is a flowchart for explaining an example of a processing sequence performed by the terminal device 10 according to an embodiment. Fig. 11 is a flowchart for explaining an example of a processing sequence performed by the base station device 50 according to an embodiment.

In the following description, it is assumed that the establishment of the RRC connection has been completed in advance between the terminal device 10 and the base station device 50 and that they are in the connected state (RRC Connected) by using a specified frequency band.

### (Processing Sequence of Terminal Device)

Upon receiving a capability information enquiry (UECapabilityEnquiry) message from the base station device 50, as illustrated in Fig. 10, the transmission unit 13 causes its own power class information to be included in the capability information (UECapabilityInformation) message in response to a request included in the capability information enquiry (UECapabilityEnquiry) message and transmits the capability information enquiry (UECapabilityEnquiry) message to the base station device 50, which is a sender (S201).

Next, the terminal device 10 measures the quality of radio communication with the base station device 50 based on the reference signal received from the base station device 50-1 in advance and the transmission unit 13 transmits radio communication quality information to the base station device 50 (S202).

Then, the reception unit 11 receives the transmission power information (RRCReconfiguration) message transmitted from the base station device 50-1 (S203). This transmission power information (RRCReconfiguration) message includes the availability information.

Subsequently, the transmission control unit 12 judges whether or not the availability information included in the transmission power information (RRCReconfiguration) message received in step S203 is "1" (S204).

If the availability information is "1" as a result of the judgment in step S204, it is considered that the use of the maximum transmission power value possessed by the terminal device 10 is permitted. Therefore, the transmission control unit 12 controls the transmission power value and the duty ratio in the uplink transmission using FDD and sets the setting to power class 2 (PC2) (S205). Regarding the setting of the setting to power class 2 (PC2), for example, the transmission power value is 26 dBm and the duty ratio is 0.5 (50%).

If the availability information is other than "1," for example, "0" as a result of the judgment in step S204, it is considered that the use of the maximum transmission power value possessed by the terminal device 10 is limited. Therefore, the transmission control unit 12 controls the transmission power value and the duty ratio in the uplink transmission using FDD and sets the setting to power class 3 (PC3) (S206). Regarding the setting of the setting to power class 3 (PC3), for example, the transmission power value is 23 dBm and the duty ratio is 1 (100%).

After step S205 or step S206, the transmission unit 13 performs the uplink transmission to the base station device 50 by using FDD according to the transmission power value and the duty ratio of the set power class (207).

### (Processing Sequence of Base Station Device)

The transmission unit 53 transmits a capability information enquiry (UECapabilityEnquiry) message to the terminal device 10 as illustrated in Fig. 11 (S251).

Then, the acquisition unit 51 receives a capability information (UECapabilityInformation) message including the power class information from the terminal device 10, which is the transmission destination of the capability information enquiry (UECapabilityEnquiry) message (S252).

Next, the determination unit 52 receives radio communication quality information transmitted from the terminal device 10 (S253). Then, the determination unit 52 determines the maximum transmission power value of the terminal device 10 based on the power class information included in the capability information (UECapabilityInformation) message received in step S252 and the radio communication quality information received in step S253 (S254).

Sequentially, the transmission unit 53 transmits a transmission power information (RRCReconfiguration) message including information about the maximum transmission power value determined in step S254 to the terminal device 10, which is the sender of the capability information (UECapabilityInformation) message (S255).

Incidentally, the sequential order of the sequences and the flowcharts described in this embodiment may be changed as long as no contradiction occurs in the processing.

The exemplary embodiment of the present invention has been described above. When the terminal device 10 and the radio communication method of this embodiment are employed, the transmission power value and the transmission duty ratio are controlled based on the transmission power information and the uplink transmission to the base station device 50 is performed by using the frequency division duplex (FDD) system based on the controlled transmission power value and transmission duty ratio. Accordingly, based on the transmission power information received when it is in the connected state (RRC Connected) with base station device 50, It becomes possible to perform control to, for example, change the transmission power value and the transmission duty ratio in the uplink transmission using the frequency division duplex (FDD) system, for example, according to the communication quality of the relevant terminal device 10 and the free capacity, etc. of the radio resource of the cell formed by the base station device 50 in the connected state (RRC Connected). Therefore, the uplink transmission can be performed by using FDD according to the transmission power value and the duty ratio which are controlled depending on the situation and the throughput can be improved. Therefore, the technology according to this embodiment can contribute to the achievement of Goal 9 of the Sustainable Development Goals (SDGs), which aims to "build resilient infrastructure, promote inclusive and sustainable industrialization and foster innovation."

Furthermore, when the base station device 50 of this embodiment is employed, the maximum transmission power value of the terminal device 10 is determined based on the power class information and the radio communication quality information, and the transmission power information including the information about the determined maximum transmission power value is transmitted to the terminal device in the connected state (RRC Connected). Accordingly, based on the power class information and the radio communication quality information received when it is in the connected state (RRC Connected) with the terminal device 10, for example, when the relevant terminal device 10 is high power terminal device (HPUE), it becomes possible to determine the maximum value (upper limit value) of the transmission power value in the uplink transmission using the frequency division duplex (FDD) system according to the communication quality, etc. Therefore, the terminal device 10 can perform the uplink transmission by using FDD and improve the throughput based on the maximum transmission power value determined according to the situation.

Incidentally, the above-described embodiment(s) is intended to facilitate understanding of the present invention and is not intended to be interpreted in a limited manner. The present invention can be changed/improved without departing from the gist thereof and the invention also includes its equivalents. Specifically speaking, embodiments which have been appropriately changed by those skilled in the art are also included within the scope of the present invention as long as they have the features of the invention. For example, the respective elements included in the embodiment(s) and their arrangement, materials, conditions, shapes, sizes, etc. are not limited to those illustrated in the examples and can be changed appropriately. Moreover, the embodiments are illustrative only and it is needless to say that partial substitutions or combinations of configurations indicated in different embodiments can be possible, and they are also within the scope of the present invention as long as they include the features of the present invention.

### REFERENCE SIGNS LIST

10, 10-1, 10-2, 10-m terminal devices
11 reception unit
12 transmission control unit
13 transmission unit
21 processor
22 memory
23 storage apparatus
24 communication apparatus
25 input apparatus
26 output apparatus
27 antenna
50, 50-1, 50-n base station devices
51 acquisition unit
52 determination unit
53 transmission unit
90 core network apparatus
100 radio communication system

## Claims

1. A terminal device for performing radio communication with a base station device,
the terminal device comprising:
a reception unit that receives transmission power information including information about a maximum transmission power value of the terminal device from the base station device when the terminal device is in a connected state with the base station device;
a transmission control unit that controls a transmission power value and a transmission duty ratio based on the transmission power information; and
a transmission unit that performs uplink transmission to the base station device by using a frequency division duplex system based on the transmission power value and the transmission duty ratio.

2. The terminal device according to claim 1,
wherein the transmission power information includes availability information indicating whether or not the maximum transmission power value of the terminal device is available; and
wherein the transmission control unit controls the transmission power value and the transmission duty ratio based on the availability information.

3. The terminal device according to claim 1,
wherein the transmission power information includes transmission power value information indicating the transmission power value.

4. The terminal device according to any one of claims 1 to 3,
wherein the transmission unit transmits power class information indicating a power class of the terminal device to the base station device when it is in the connected state.

5. A base station device for performing radio communication with a terminal device,
the base station device comprising:
an acquisition unit that acquires power class information indicating a power class of the terminal device when the base station device is in a connected state with the terminal device;
a determination unit that determines a maximum transmission power value of the terminal device based on the power class information and radio communication quality information indicating quality of radio communication with the terminal device; and
a transmission unit that transmits transmission power information including information about the determined maximum transmission power value to the terminal device.

6. The base station device according to claim 5,
wherein the base station device is in a connected state with the terminal device by using a specified frequency band; and
wherein the determination unit determines a maximum transmission power value of the terminal device based on the power class information and the radio communication quality information, and radio resource information about a radio resource in the specified frequency band.

7. A radio communication method used for a terminal device for performing radio communication with a base station device,
the radio communication method comprising:
receiving transmission power information including information about a maximum transmission power value of the terminal device from the base station device when the terminal device is in a connected state with the base station device;
controlling a transmission power value and a transmission duty ratio based on the transmission power information; and
performing uplink transmission to the base station device by using a frequency division duplex system based on the transmission power value and the transmission duty ratio.
